# EUROPEAN PATENT SPECIFICATION

(11) **EP 1 971 760 B1**
(45) Date of publication and mention of the grant of the patent: **10.07.2013**
(21) Application number: 06820609.3
(22) Date of filing: 21.12.2006
(51) Int. Cl.: F02B 19/08

(54) **INTERNAL COMBUSTION ENGINE**
BRENNKRAFTMASCHINE
MOTEUR A COMBUSTION INTERNE

(30) Priority: 09.01.2006 GB 0600301; 16.01.2006 GB 0600843; 17.05.2006 GB 0609721
(43) Date of publication of application: 24.09.2008
(73) Proprietor: Musi Engines Limited, Styvechale, Coventry CV3 6FY (GB)
(72) Inventor: MERRITT, Dan, Coventry CV3 6FY (GB)
(74) Representative: Gee, Steven William
(86) International application number: PCT/GB2006/004840
(87) International publication number: WO 2007/080366

(56) References cited:
- WO-A-2005/052335
- GB-A- 479 861
- US-A- 2 066 228
- US-A- 2 855 907

## Description

This invention relates to a spark ignited reciprocating internal combustion engine operating either on the four stroke or on the two stroke engine cycle.

In particular it relates to lean-burn spark-ignited engines using stratified charge methods. The engine can operate at part load, even at idling, without throttling the air intake in order to promote higher thermal efficiency at part load.

This invention is suitable for use in automotive and motor-cycle applications and has a potential to enable large savings of fuel.

An engine according to this invention can be constructed to operate either with a constant value of compression ratio or with variable compression ratio.

This invention in particular relates to a number of developments and improvements of the internal combustion engine described in WO 2005/052335.

Accordingly, this invention provides an internal combustion engine comprising:
a cylinder;
a piston located in the cylinder for reciprocating movement therein;
air inlet means communicating with the cylinder;
exhaust means communicating with the cylinder;
an indirect combustion chamber communicating with the cylinder and having a near end and a far end in relation to the piston;
a transfer orifice communicating between the cylinder and the combustion chamber at its near end, the transfer orifice being adapted to deliver a jet of air into the combustion chamber during the compression stroke of the piston;
means to promote air movement within the combustion chamber in helical swirl motion having a tangential velocity component around the combustion chamber and an axial velocity component along the combustion chamber, the axial velocity component being directed away from the near end and towards the far end;
spark ignition means located in the combustion chamber;
fuel injection means communicating with the combustion chamber, adapted to deliver some fuel into the said jet of air to enable a spark ignitable mixture to form in the gas when it arrives at the spark ignition means;
a controller to control the fuel injection process and spark ignition process;
characterised in that the axial velocity component of the helical swirl motion is induced by a surface in the form of a helical ramp situated within the combustion chamber.

It will be noted that in the engine described in the previous invention WO2005/052335 the transfer orifice was used as an exclusive means to control both the swirl velocity component and axial velocity component required to promote helical swirl flow in the combustion chamber. Helical swirl is essential to promote stratification according to the invention. The axial component was generated by inclining the axis of the transfer orifice to the axis of the combustion chamber by an angle larger than 90°. The transfer orifice tangential position determined the peripheral or swirl velocity component. However such simple design required a relatively long transfer orifice in order to impart a stable axial velocity component to the gas flowing through it. Excessive length decreases the engine thermal efficiency due to increased gas friction and heat loss from orifice walls when gas moves through it at high velocity. An inclined entry to the orifice at the cylinder end results in an elongated elliptical hole so reducing the area available to valves and impeding engine breathing.

This invention provides an improved and novel means for promoting at least an axial velocity component in the combustion chamber to promote accurate helical swirl flow. It removes all the disadvantages mentioned in the last paragraph. The invention is achieved by constructing a helical ramp within the combustion chamber. It removes the need to incline the transfer orifice. The axial velocity component may also be achieved by providing a helical groove on the periphery of the chamber. The helical ramp and the helical groove both give the gas an axial velocity component by internal inclined surfaces designed for the purpose. The construction of such surfaces require careful design since the ratio between axial and peripheral velocity components in helical swirl needed for stable combustion can be critical.

The helical ramp is shaped like a wedge wound around the axis of the combustion chamber, like a screw thread, over a relatively short axial distance. The ramp terminates after turning a suitable angle around the axis, preferably but not essentially less than 270°. The construction of such ramps will be explained later with the aid of diagrams.

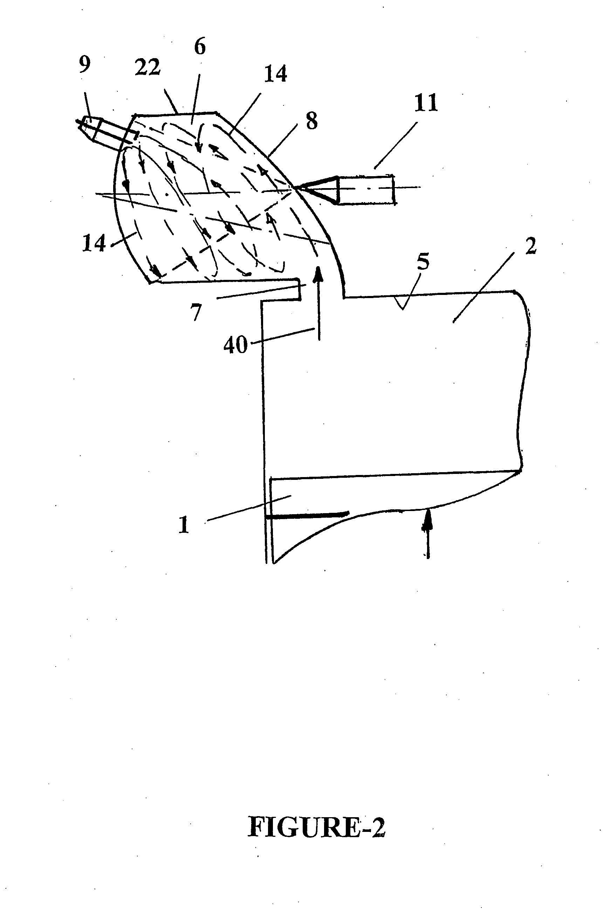

The additional optional helical groove is a peripheral channel cut into the circumferential wall of the combustion chamber (such as 22 in Fig. 2), like the groove in a nut mating with a bolt having a screw thread. Preferably the groove should start near where the transfer orifice enters the combustion chamber. Since the air is induced to swirl around the periphery of the chamber some of it will be guided by such a groove which will induce it to be propelled towards the far end of the chamber. The dimensions of the groove, namely its depth, shape and axial penetration into the chamber, can be chosen by the designer. The construction is believed to be self explanatory and is therefore not illustrated with the aid of diagrams.

In addition this invention provides a solution to the fuelling needs of the engine, essential to allow it to operate over the full range of overall air fuel ratios. Fuel is added to the air as it enters the indirect combustion chamber from the cylinder through the transfer orifice during the compression stroke. The mass of air so transferred per unit of time increases non-linearly from a relatively low value at the start of the compression stroke to a much higher value at the end of the stroke when the density and velocity of the air in the transfer orifice rise sharply. Consequently, the fuel injection means will need to deliver a progressively increasing mass flow rate, during the compression stroke of each engine cycle, in order to seed the air jet with fuel so that the mixture so formed is combustible. It transpires that to date no single fuel injector is known to exist in the marketplace which has such delivery capability. Consequently this invention provides for the positioning of two fuel injectors, at critical locations in the combustion chamber. A first fuel injector, for lower rates of fuel mass flow per unit time, is situated at the near end of the chamber and aligned towards the far end to deliver fuel during the earlier part of the compression stroke, and a second fuel injector capable of substantially higher fuel delivery rates is positioned aligned towards the air jet emerging from the transfer orifice and can deliver fuel at higher engine loads, during the latter part of the compression stroke, and to continue to do so even after ignition if necessary.

This invention also provides means for varying the compression ratio of the engine during operation by adjusting the volume of the combustion chamber with a movable plunger. This enables the compression ratio to increase when operating under lean air fuel ratio conditions, so increasing the thermal efficiency of the engine at part load without the danger of pre-ignition or detonation.

The term air or gas is used herein to describe air which is either pure or contains other gases such as products of combustion or even hydrocarbon gases. The term mixture describes air mixed with vaporised fuel destined for ignition. The term lean mixture is used to describe an air and fuel mixture that is not ignitable directly by the spark ignition means used in the engine. The term lean burn is used herein to describe the ability of an engine to perform with an overall lean mixture by using stratification.

The term ignition pot is used herein to describe a cavity, with a free volume, containing a spark plug, the volume communicates with the combustion chamber through a hole of a diameter smaller than the diameter of the spark plug threaded portion.

The terms spark plug and ignition means may also include a spark plug situated in an ignition pot.

The term BMEP describes the brake mean effective pressure developed in the cylinder.

The term chamber describes the indirect combustion chamber. Preferably the combustion chamber is substantially symmetrical about its central axis, for example cylindrical or conical, but other shapes can be used to advantage.

The invention is further described herein by way of examples with reference to the accompanying schematic diagrams which are not drawn to scale and are presented for illustrative purposes only.
Figure 1 is a reproduction of Fig.1 of WO 2005/052335 which is repeated for ease of reference;
Figure 2 is a similar view of the arrangement for an engine as illustrated in Figure 1, but is according to the present invention, and shows the use of internal surfaces to promote an axial velocity component to the air jet;
Figure 3 is an internal sectional view into the near end of the combustion chamber of an internal surface constructed as a helical ramp over substantially 270°, this end view is simplified by ignoring the wall thickness;
Figure 4 is a view in direction S shown in Figure 3, for the sole purpose of illustrating a possible shape of the helical ramp 8B, again ignoring combustion chamber wall thicknesses and omitting to show the transfer orifice 7 and fuel injector 11;
Figure 5 is a view similar to Figures 3 and 4 showing an extended helical ramp designed to impart tangential motion in addition to axial motion;
Figures 6 and 7 are similar to Figure 3 but illustrate some possible design variations concerning the helical ramp;
Figure 8 shows an embodiment having two fuel injectors;
Figure 9 illustrates a section of a combustion chamber providing variable compression ratio using hydraulic actuation of the plunger;
Figure 10 illustrates a section of a combustion chamber providing variable compression ratio using electric-mechanical actuation of the plunger; and

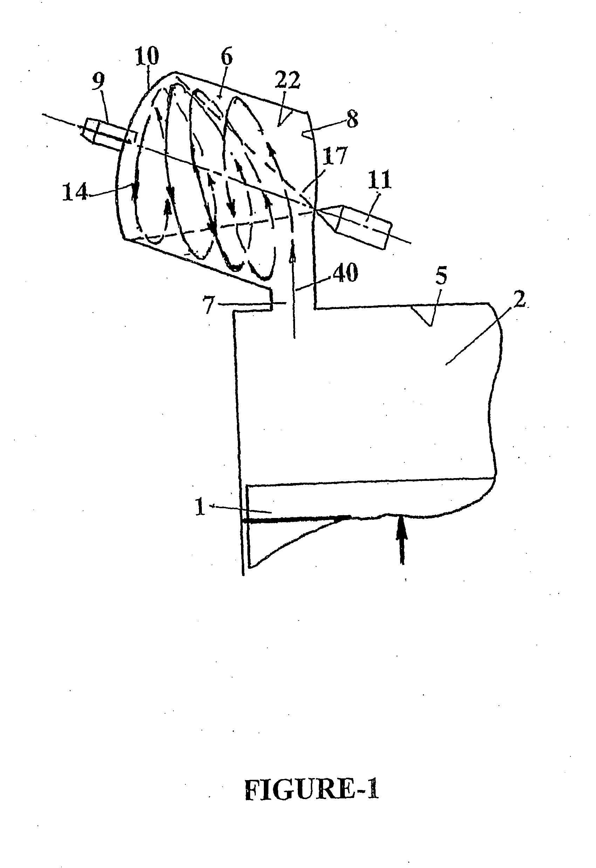

In the prior art arrangement of Fig.1 the axial velocity component needed for helical swirl is induced by inclining the longitudinal axis of the combustion chamber 6 to the longitudinal axis of the cylinder 2, and also inclining the transfer orifice 7 to the longitudinal axis of the combustion chamber 6. According to preferred embodiments of the present invention, the longitudinal axis of the combustion chamber is substantially perpendicular to the longitudinal axis of the cylinder, and the axial velocity component is induced by appropriately configured internal surfaces within the combustion chamber.

In the arrangement of Fig. 1 the piston 1 moves upwardly as drawn in cylinder 2 during the compression stroke. The combustion chamber 6 communicates with the cylinder through transfer orifice 7. The single fuel injector 11 delivers fuel across the air jet 40. The fuel cone is shown to intersect the air jet and to extend to the full diameter of the cylindrical combustion chamber when it reaches the far end 10 where the spark plug 9 is situated. The diagram also illustrates a stream line 14 rotating around the periphery 22 of the combustion chamber in helical swirl motion. Cylinder 2 communicates with inlet and exhaust valves in known fashion (not shown). The combustion chamber 6 is cylindrical and a spark plug 9 is situated at the far end 10. The transfer orifice 7 is inclined to the longitudinal axis of the combustion chamber 6 at an obtuse angle and enters the chamber 6 at the near end 8, in a direction having both axial and tangential components. The engine controller (not shown) determines the timing and duration of fuel injection, the fuel line pressure and the timing of spark ignition, all as described in WO 2005/052335.

In the embodiment of Fig. 2 many components have the same functions as those of the arrangement of Fig. 1, and are given the same reference numerals. The function of the common components will not be repeated. In this embodiment the air jet 40 enters the combustion chamber 6 at substantially 90° to the longitudinal axis of the combustion chamber and with a tangential velocity component but without an axial velocity component. The axial velocity component is produced by the inclined shape of the internal surface of the combustion chamber, specifically the end wall at the near end 8, so that the streamline 14 follows the incline of the end wall.

In one such form, not shown, the near end wall can be tilted towards the far end from one side to the other, the side furthest from transfer orifice 7 being nearer the far end than the side nearest to transfer orifice 7. Generally speaking, the near end wall can be shaped to contain an inclined surface pointing in the axial direction away from the near end.

In a preferred form of this invention the near end wall can be shaped in a more complex form such as a wedge spiralling around the periphery to form a helical ramp, the helical ramp having a constant or varying (preferably increasing) pitch.

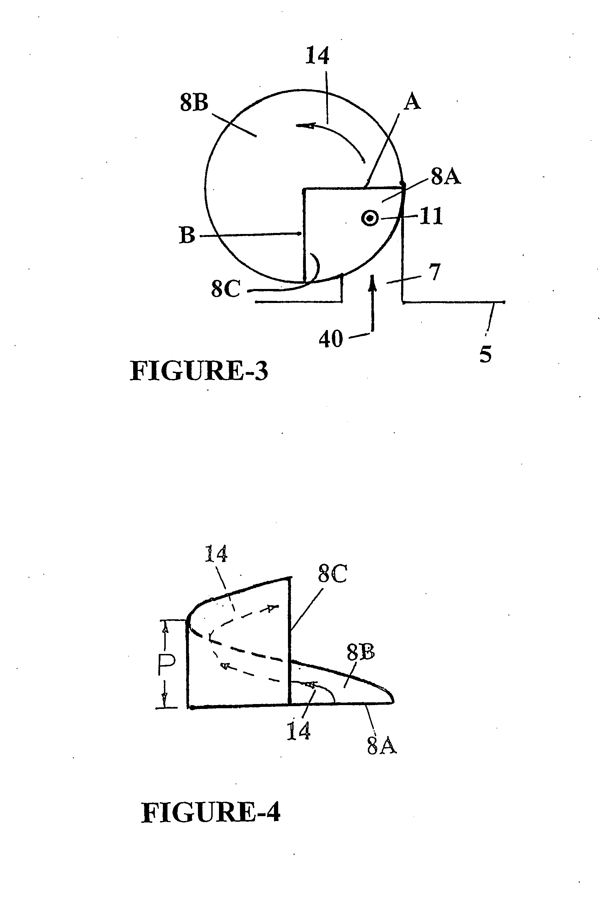

Figs. 3 and 4 show one embodiment of such an arrangement. Fig. 3 shows an internal view towards the near end of combustion chamber 8 in which the entry port for the fuel injector 11 can be seen, together with the transfer orifice 7 and the vector representing the velocity vector of the air jet 40 at entry to the combustion chamber. Also illustrated is a streamline 14 moving in peripheral rotation. Radial line A shows the beginning of a rising helical ramp 8B following a flat platform 8A, the platform 8A being coincident with an edge of the (circular) transfer orifice 7. The ramp 8B extends through approximately 270° around the combustion chamber, to line B where it terminates in wall 8C which is parallel to the longitudinal axis of the combustion chamber and joins the end of the ramp 8B to the platform 8A.

The platform 8A, which in this preferred example extends over 90°, serves the three important functions described as follows. It allows a relatively uninterrupted access to the air jet entering from the transfer port, it allows access for the spray of a second fuel injector (not shown) situated opposite the transfer port and it also allows a flat platform for the exit port of the first fuel injector. The wall 8C also serves the function of containing the jet of air entering from the transfer orifice between itself and the periphery of the combustion chamber so forcing it to change direction and climb the ramp.

Fig. 4 illustrates the helical ramp 8B of Fig. 3 in a more visual way including the streamline 14 as it moves along the ramp. Dimension P represents half the pitch of the helix, which pitch determines the intensity of the axial component of the helical swirl motion. In this embodiment the pitch is constant.

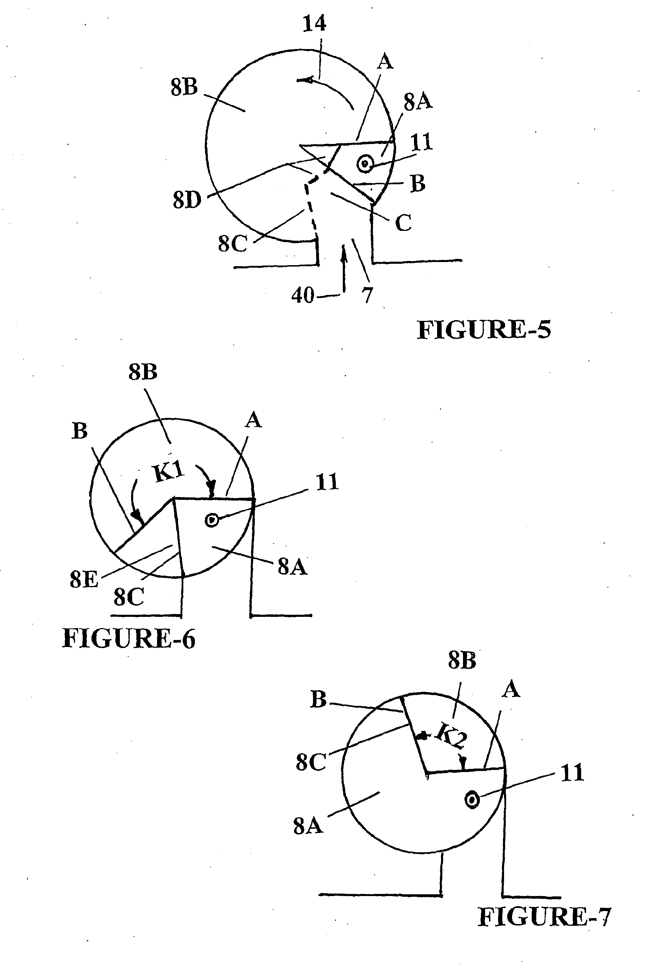

Figs.6 and 7 show two constructions of the helical ramp extending over different arc angles KI and K2. In Fig. 6 the ramp 8B terminates at line B to be followed by an elevated platform 8E which contains line B. Platform 8E continues to axial wall 8C which returns to platform 8A. In Fig. 7 a shorter ramp terminates at B without a following elevated platform. Line B is also located on wall 8C which extends back to platform 8A.

The choice of arc K, the shape and extent of platforms 8A and 8E and wall 8C is available to the designer.

Additionally, it may be desirable to use an internal surface of the combustion chamber to either create or amplify the tangential movement of the air flow instead of only relying upon the positioning of the transfer orifice to do the whole of this task. One such arrangement is shown in Fig. 5 which is similar to Fig. 2 but where the helical ramp 8B is extended beyond 270° around the periphery of the combustion chamber to, in this embodiment, approximately 310° terminating at line B.

In this illustration the end wall 8C can remain situated slightly beyond 270° leaving a cavity C below the last remaining portion of the helical ramp 8B. The ceiling of such a cavity, under the ramp, can be made to effectively extend the transfer orifice 7 into the combustion chamber under the roof. A deflecting wall 8D, situated wholly or partially under this roof, nearer the central axis of the combustion chamber, can be used to deflect the air jet in the tangential direction, towards the periphery of the combustion chamber and into the open space 8A.

The first fuel injector port 11 is positioned in the platform 8A allowing the fuel spray to reach the far end of the combustion chamber where the spark plug is situated.

From there the deflected peripheral flow continues past the radial line A where the helical ramp 8B starts.

The deflecting surface 8D can be made curved or flat or a combination of both and can extend beyond the roof at the end of the ramp 8B as shown, or it can terminate at the line B where the ramp also terminates.

Such an arrangement can be used with a transfer orifice 7 placed somewhat away from an extreme tangential position as is shown in Fig. 5. In this way the tangential velocity component is imparted in combination both by internal surface 8D and also by the near tangential orientation of air jet 40.

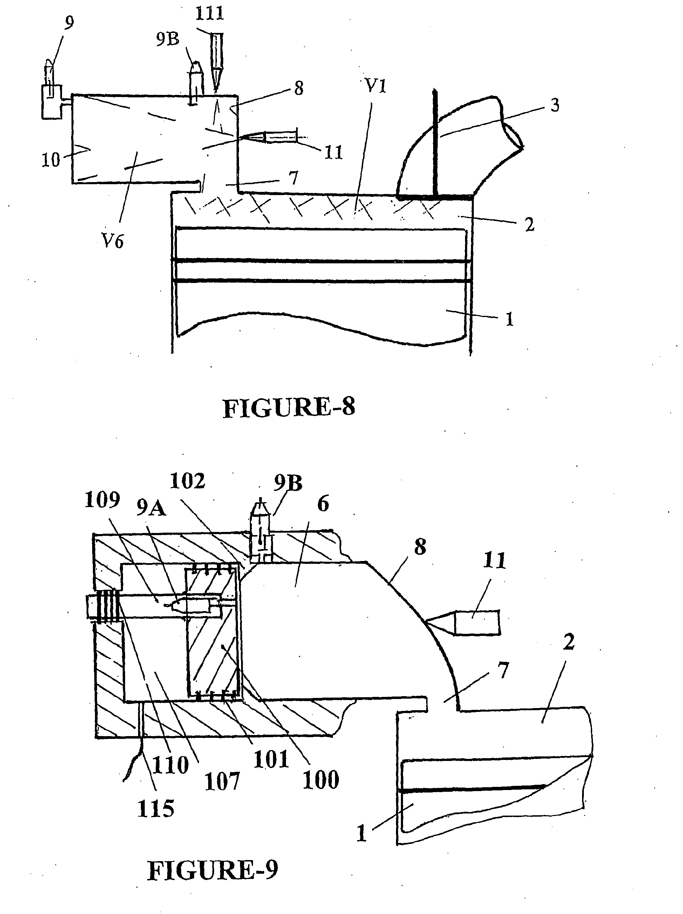

Fig. 8 shows the engine when the piston 1 is approximately 30 crank degrees before the end of its compression stroke. In this simplified illustration the chamber is provided with two fuel injectors which together provide the fuel injection means. The first fuel injector 11 is aimed towards the far end of the combustion chamber, preferably delivering its fuel spray across and through the air jet emerging from the transfer orifice 7. The second fuel injector 111 is aimed to deliver a spray of fuel substantially axially into the air jet emerging from the transfer orifice, in the opposite direction of the air flow. The illustrated piston position is chosen as an example when the shaded volume marked V1 remaining above the piston 1 is equal in magnitude to the volume V6 of the combustion chamber. Therefore, the mass of air contained in both volumes is nearly equal. If fuel injector 111 remains inactive until this point in time the air in volume V1 above the piston will contain no fuel whilst the air in the combustion chamber, in volume V6, will contain fuel which is stratified in the vicinity of the spark plug by helical swirl gas motion. If spark plug 9 is now energised the mixture in volume V6 will burn but only approximately half the mass of air originally in the cylinder can be used in the combustion process.

In this example, the first fuel injector 11 provides half the air with fuel over approximately 150 crank degrees out of the 180 crank degrees of the compression stroke. If all of the oxygen in the air is to be used in combustion the second fuel injector 111 will be required to deliver approximately the same fuel quantity but only over some 30 crank degrees. The rate of fuel mass discharged per unit time averaged over this crank angle will need to be approximately five times greater than that delivered by the first fuel injector 11.

If the first fuel injector 11 were capable of increasing its rate of flow by a factor of up to five during the compression stroke under the control of the engine management system, the second injector may not be needed but such a variable flow rate injector capable of reacting is such a short time is not currently available as far as it is known.

The first fuel injector 11 can operate the engine from idling to mid range BMEP on its own but for greater outputs the second fuel injector 111 will be needed to deliver fuel during the same engine cycle. The fuel injected by the second fuel injector will be mixing with air entering the chamber at the highest mass flow rate since the air velocity and density in the transfer orifice will be at their highest at the end of the compression stroke. This will assist rapid vaporisation of fuel delivered by fuel injector 111 into this air. The mixture so formed will be ignited by the flame which started by spark plug 9 in the mixture fuelled by the first injector 11.

Although the use of two fuel injectors may sound extravagant it may be a small price to pay to allow a gasoline engine to compete with the thermal efficiency of diesel engines at part load.

It should be appreciated that the second fuel injector 111 can also be controlled to deliver fuel during the combustion period so that the fuel burns soon after being discharged in a similar way to the combustion process in a diesel engine.

It should also be appreciated that due to its positioning opposite to the transfer orifice, under some engine operational conditions it may be advantageous to use the second fuel injector 111 to spray fuel through the transfer orifice 7 directly into the cylinder 2, when the air jet is either absent of weak, either during the induction stroke or the early part of the compression stroke or both. In this way the jet of air transferred into the combustion chamber during the compression stroke may contain some fuel.

The operation of the engine can be described as follows. Under idling conditions the first fuel injector 11 delivers a small quantity of fuel early in the compression stroke and then stops. The air jet velocity at that time is small and the fuel reaches the far end wall 10 and is deposited on it. When air reaches the far end of the chamber 10 it has time to vaporise this deposited fuel and the helical swirl motion ensures that the resulting mixture remains near the end wall 10. Spark ignition takes place near this mixture which is rich enough to burn and allow unthrottled idling to take place.

For BMEP between idling and mid range the fuel delivery time of injector 11 is extended whilst the timing of injection start and stop events is controlled to optimise combustion. The second fuel injector 111 remains inactive in this range.

For higher BMEP outputs the second fuel injector 111 is also activated towards the end of the compression stroke, after the first fuel injector 11 had been activated and when the air jet velocity and its gas density rise sharply. After ignition by spark plug 9 the flame reaches the fuel mixture formed as a result of the fuel injected by the second fuel injector 111 which can continue to inject its fuel even during burning. In some designs it may be advantageous to position a second spark plug 9B, nearer the near end 8 of the chamber to assist in the ignition of fuel at high loads.

Adjustment of fuel injection rates of flow to cope with engine speed variations can be achieved by changing the fuel line pressure at entry to the fuel injectors, as is normal practice.

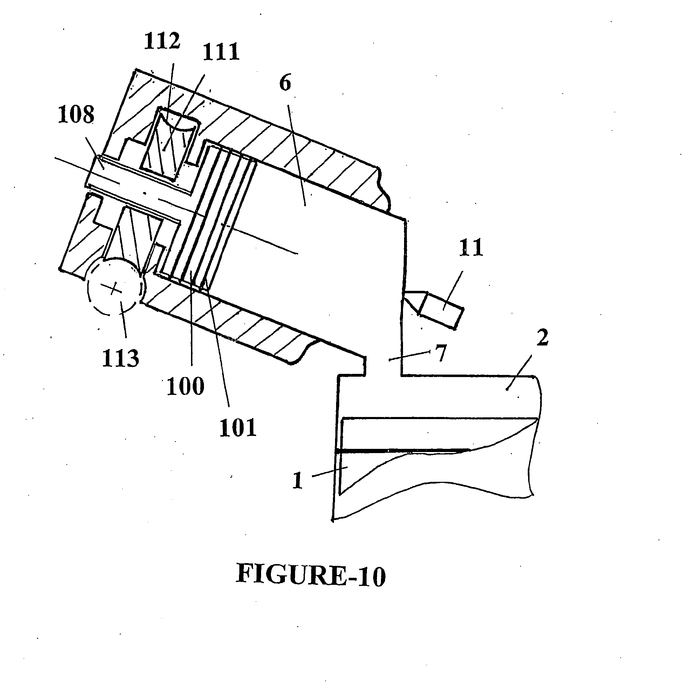

Figs. 9 and 10 show the variable compression ratio aspect of the present invention. As before, the air moves in the combustion chamber 6 in a helical swirl flow.

To provide variable compression ratio the cylindrically shaped combustion chamber 6 has a movable wall or boundary in the form of plunger 100 at its far end. The plunger is provided with peripheral multiple seals 101, for example piston ring type seals, capable of withstanding elevated temperatures. The external walls of the combustion chamber can be cooled to protect the seals. The plunger is shown at its innermost position, promoting the highest value of compression ratio and is constrained from moving further by ridge 102 which can also provide a further sealing face.

The space 107 in Fig.9 behind the plunger is filled with hydraulic fluid, preferably liquid such as oil, piped into the space through pipe 115 leading to a hole. Compressed gas may be used if preferred and a suitable supply can be arranged. The fluid is pressurised by a pump to a pressure which must exceed the peak cylinder gas pressure.

Two possible positions for the spark plug 9 are shown in Fig. 9. If position 9A is desired the plug needs to be surrounded by tube 109 attached to the plunger by a leak proof joint, for example by a weld, and the tube will need its own seal 110 as it moves with the plunger.

If position 9B is chosen it needs to be near the face of the plunger, at its innermost position as shown, to allow spark ignition under lean combustion conditions. Both spark plugs are shown in an ignition cavity which communicates with the combustion chamber through a small hole, so as to minimise the wetting of the spark plug by injected fuel under idling and low load conditions, but this is not essential if ignition can be assured by exposed spark plugs.

The plunger is kept at its high compression ratio position, as shown in Fig. 9, for starting and low load conditions and when the fuel supply is increased the hydraulic line controller allows some fluid to be discharged from space 107 to enable the peak cylinder pressure to displace the plunger to a lower compression ratio position. The discharge can be controlled by a variable pressure relief valve which restricts cylinder peak pressure to a desired value.

Fig. 10 shows a mechanical means for actuating and controlling the position of the plunger 100. The plunger is attached to stem 108 which is screw threaded and nut 111 is captured in the casing where it can rotate to actuate movement of the plunger. The rotation is shown to be effected by a worm 113 and wheel 112 arrangement and the worm may be rotated by an electric motor, for example a stepping motor. This method allows a precise positioning of the plunger over its movement range but it may require more hardware compared with the hydraulic system for a multi-cylinder engine.

The variable compression ratio capability can be used in both 4-stroke and 2-stroke engines, when normally aspirated, turbocharged or supercharged. It will moderate the peak cylinder pressures at high BMEP operations.

## Claims

1. An internal combustion engine comprising;
a cylinder (2);
a piston (1) located in the cylinder for reciprocating movement therein;
air inlet means communicating with the cylinder;
exhaust means communicating with the cylinder;
an indirect combustion chamber (6) communicating with the cylinder and having a near end (8) and a far end (10) in relation to the piston;
a transfer orifice (7) communicating between the cylinder (2) and the combustion chamber (6) at its near end (8), the transfer orifice being adapted to deliver a jet of air into the combustion chamber during the compression stroke of the piston; means (8B) to promote air movement within the combustion chamber (6) in helical swirl motion having a tangential velocity component around the combustion chamber and an axial velocity component along the combustion chamber, the axial velocity component being directed away from the near end (8) and towards the far end (10);
spark ignition means (9) located in the combustion chamber;
fuel injection means (11) communicating with the combustion chamber (6), adapted to deliver some fuel into the said jet of air to enable a spark ignitable mixture to form in the gas when it arrives at the spark ignition means (9);
a controller to control the fuel injection process and spark ignition process; **characterised in that** the axial velocity component of the helical swirl motion is induced by a surface (8B) in the form of a helical ramp situated within the combustion chamber (6).

2. An engine according to claim 1 wherein the combustion chamber (6) is cylindrical.

3. An engine according to Claim 1 or Claim 2 wherein the helical ramp (8B) extends radially to the periphery (22) of the combustion chamber (6) and over an angle which is less than 360° around the axis of the combustion chamber.

4. An engine according to Claim 1 or Claim 2 wherein the internal surface (22) of the combustion chamber (6) is in the form of a helical groove formed in the surface of the periphery of the combustion chamber.

5. An engine according to any one of Claims 1-4 wherein the fuel injection means is a fuel injector (11) which is aimed at the far end (10) of the combustion chamber (8).

6. An engine according to any one of Claims 1-5 wherein the fuel injection means comprises a first fuel injector (11) and a second fuel injector (111), the second fuel injector being aimed at the transfer orifice (7).

7. An engine according to Claim 6 wherein the first fuel injector (11) and the second fuel injector (111) can deliver fuel to the combustion chamber (6) during the same engine cycle.

8. An engine according to any one of Claims 1-7 wherein the far end (10) of the combustion chamber (6) is adapted to allow a sliding plunger (100) to be actuated to change and maintain a position over a limited predetermined distance along the axis of the chamber (6) whilst providing a gas tight seal to the periphery (22) of the chamber.

9. An engine according to Claim 8 wherein the plunger (100) movement is actuated hydraulically.

10. An engine according to Claim 8 wherein the plunger (100) movement is actuated mechanically.

11. An engine according to claim 1 operating on the two stroke cycle.

12. An engine according to claim 1 operating on the four stroke cycle.

## Patentansprüche

1. Verbrennungsmotor, umfassend:
einen Zylinder (2);
einen in dem Zylinder angeordneten und darin hin- und hergehenden Kolben (1);
Lufteinlassmittel, die mit dem Zylinder kommunizieren;
Auslassmittel, die mit dem Zylinder kommunizieren;
eine indirekte Verbrennungskammer (6), die mit dem Zylinder kommuniziert und in Bezug auf den Kolben ein nahes Ende (8) und ein fernes Ende (10) umfasst;
eine Transferöffnung (7), die zwischen dem Zylinder (2) und der Verbrennungskammer (6) an deren nahem Ende (8) kommuniziert, wobei die Transferöffnung dazu ausgelegt ist, während des Kompressionshubs des Kolbens einen Luftstrahl in die Verbrennungskammer abzugeben;
Mittel (8B) zur Förderung der Luftbewegung im Inneren der Verbrennungskammer (6) in einer spiralförmigen Verwirbelungsbewegung mit einer tangentialen Geschwindigkeitskomponente um die Verbrennungskammer herum und einer axialen Geschwindigkeitskomponente entlang der Verbrennungskammer, wobei die axiale Geschwindigkeitskomponente vom nahen Ende (8) weg und auf das ferne Ende (10) hin ausgerichtet ist;
Funkenzündungsmittel (9), die in der Verbrennungskammer angeordnet sind;
Kraftstoffeinspritzmittel (11), die mit der Verbrennungskammer (6) kommunizieren und so ausgelegt sind, dass sie einigen Kraftstoff in den Luftstrom abgeben, so dass sich in dem Gas eine durch Funken entzündbare Mischung herausbilden kann, wenn es an den Funkenzündungsmitteln (9) ankommt;
eine Steuerungseinrichtung zum Steuern des Kraftstoffeinspritzprozesses und des Funkenzündungsprozesses;
**dadurch gekennzeichnet, dass** die axiale Geschwindigkeitskomponente der spiralförmigen Verwirbelungsbewegung durch eine Oberfläche (8B) verursacht wird,
welche die Form einer spiralförmigen Rampe hat, die im Inneren der Verbrennungskammer (6) angeordnet ist.

2. Motor gemäß Anspruch 1, wobei die Verbrennungskammer (6) zylindrisch ist.

3. Motor gemäß Anspruch 1 oder Anspruch 2, wobei die spiralförmige Rampe (8B) radial zur Peripherie (22) der Verbrennungskammer (6) und über einen Winkel, der kleiner als 360° ist, um die Achse der Verbrennungskammer herum verläuft.

4. Motor gemäß Anspruch 1 oder Anspruch 2, wobei die innere Oberfläche (22) der Verbrennungskammer (6) die Form einer spiralförmigen Rinne hat, die in der Oberfläche der Peripherie der Verbrennungskammer ausgebildet ist.

5. Motor gemäß einem der Ansprüche 1 bis 4, wobei es sich bei den Kraftstoffeinspritzmitteln um eine Einspritzdüse (11) handelt, die auf das ferne Ende (10) der Verbrennungskammer (8) gerichtet ist.

6. Motor gemäß einem der Ansprüche 1 bis 5, wobei die Kraftstoffeinspritzmittel eine erste Einspritzdüse (11) und eine zweite Einspritzdüse (111) umfassen, wobei die zweite Einspritzdüse auf die Transferöffnung (7) gerichtet ist.

7. Motor gemäß Anspruch 6, wobei die erste Einspritzdüse (11) und die zweite Einspritzdüse (111) während desselben Motorzyklus Kraftstoff in die Verbrennungskammer (6) abgeben können.

8. Motor gemäß einem der Ansprüche 1 bis 7, wobei das ferne Ende (10) der Verbrennungskammer (6) so ausgelegt ist, dass es einem gleitenden Stößel (100) möglich ist, so betätigt zu werden, dass er eine Position über eine begrenzte vorgegebene Distanz entlang der Achse der Kammer (6) ändern und beibehalten kann, während ein gasdichter Abschluss zur Peripherie (22) der Kammer gewährleistet ist.

9. Motor gemäß Anspruch 8, wobei die Bewegung des Stößels (100) hydraulisch bewirkt wird.

10. Motor gemäß Anspruch 8, wobei die Bewegung des Stößels (100) mechanisch bewirkt wird.

11. Motor gemäß Anspruch 1, wobei der Motor mit dem Zweitaktzyklus arbeitet.

12. Motor gemäß Anspruch 1, wobei der Motor mit dem Viertzyklus arbeitet.

## Revendications

1. Un moteur à combustion interne comprenant :
un cylindre (2) ;
un piston (1) situé dans le cylindre pour un déplacement coulissant à l'intérieur de ce dernier ;
un moyen d'admission d'air communiquant avec le cylindre ;
un moyen d'échappement communiquant avec le cylindre ;
une chambre de combustion indirecte (6) communiquant avec le cylindre et ayant une extrémité proche (8) et une extrémité éloignée (10) relativement au piston ;
un orifice de transfert (7) communiquant entre le cylindre (2) et la chambre de combustion (6) au niveau de son extrémité proche (8), l'orifice de transfert étant adapté pour délivrer un jet d'air dans la chambre de combustion durant le temps de compression du piston ;
un moyen (8B) pour promouvoir un déplacement d'air à l'intérieur de la chambre de combustion (6) dans un mouvement de tourbillon hélicoïdal ayant un composant de vitesse tangentielle autour de la chambre de combustion et un composant de vitesse axiale le long de la chambre de combustion, le composant de vitesse axiale étant dirigé à l'écart de l'extrémité proche (8) et en direction de l'extrémité éloignée (10) ;
un moyen d'allumage par étincelle (9) situé dans la chambre de combustion ;
un moyen d'injection de carburant (11) communiquant avec la chambre de combustion (6), adapté pour délivrer du carburant dans ledit jet d'air pour permettre à un mélange pouvant être allumé par étincelle de se former dans le gaz quand il arrive au niveau du moyen d'allumage par étincelle (9) ;
un contrôleur pour contrôler le processus d'injection de carburant et le processus d'allumage par étincelle ;
**caractérisé en ce que** le composant de vitesse axiale du mouvement de tourbillon hélicoïdal est induit par une surface (8B) sous la forme d'une rampe hélicoïdale située à l'intérieur de la chambre de combustion (6).

2. Un moteur selon la revendication 1 dans lequel la chambre de combustion (6) est cylindrique.

3. Un moteur selon la revendication 1 ou la revendication 2 dans lequel la rampe hélicoïdale (8B) s'étend de façon radiale par rapport à la périphérie (22) de la chambre de combustion (6) et sur un angle qui est inférieur à 360° autour de l'axe de la chambre de combustion.

4. Un moteur selon la revendication 1 ou la revendication 2 dans lequel la surface interne (22) de la chambre de combustion (6) est sous la forme d'une rainure hélicoïdale formée dans la surface de la périphérie de la chambre de combustion.

5. Un moteur selon n'importe laquelle des revendications 1 à 4 dans lequel le moyen d'injection de carburant est un injecteur de carburant (11) qui est dirigé vers l'extrémité éloignée (10) de la chambre de combustion (8).

6. Un moteur selon n'importe laquelle des revendications 1 à 5 dans lequel le moyen d'injection de carburant comprend un premier injecteur de carburant (11) et un deuxième injecteur de carburant (111), le deuxième injecteur de carburant étant dirigé vers l'orifice de transfert (7).

7. Un moteur selon la revendication 6 dans lequel le premier injecteur de carburant (11) et le deuxième injecteur de carburant (111) peuvent délivrer du carburant à la chambre de combustion (6) au cours du même cycle de moteur.

8. Un moteur selon n'importe laquelle des revendications 1 à 7 dans lequel l'extrémité éloignée (10) de la chambre de combustion (6) est adaptée pour permettre à un plongeur coulissant (100) d'être actionné pour changer et maintenir une position sur une distance prédéterminée limitée le long de l'axe de la chambre (6) tout en fournissant un dispositif d'étanchéité au gaz à la périphérie (22) de la chambre.

9. Un moteur selon la revendication 8 dans lequel le mouvement du plongeur (100) est actionné de façon hydraulique.

10. Un moteur selon la revendication 8 dans lequel le mouvement du plongeur (100) est actionné de façon mécanique.

11. Un moteur selon la revendication 1 fonctionnant sur le cycle à deux temps.

12. Un moteur selon la revendication 1 fonctionnant sur le cycle à quatre temps.
